# EUROPEAN PATENT SPECIFICATION

(11) **EP 1 542 168 B1**
(45) Date of publication and mention of the grant of the patent: **26.03.2008**
(21) Application number: 04028218.8
(22) Date of filing: 29.11.2004
(51) Int. Cl.: G06T 17/20

(54) **Method of analyzing electronic components, device for analyzing electronic components and electronic components using these**
Verfahren zum Analysieren elektrischer Bauteile, Vorrichtung zum Analysieren elektronischer Bauteile und elektrische Bauteile welche diese verwenden
Procédé d' analyse de composants electroniques, dispositif d'analyse de composants électroniques et composants électroniques utilisant ceux-ci

(30) Priority: 11.12.2003 JP 2003412987
(43) Date of publication of application: 15.06.2005
(73) Proprietor: MATSUSHITA ELECTRIC INDUSTRIAL CO., LTD, Kadoma-shi, Osaka 571-8501 (JP)
(72) Inventor: Sasaki, Yukinori, Nishinomiya-shi Hyogo 662-0032 (JP)
(74) Representative: Balsters, Robert

(56) References cited:
- EP-A- 1 197 919
- SMETAK E C ET AL: "Application of solid modeling to three-dimensional electrostatic field computation" IEEE, 2 October 1988 (1988-10-02), pages 1707-1711, XP010519310
- KAIHUAI QIN ET AL: "A genetic algorithm for the minimum weight triangulation" EVOLUTIONARY COMPUTATION, 1997., IEEE INTERNATIONAL CONFERENCE ON INDIANAPOLIS, IN, USA 13-16 APRIL 1997, NEW YORK, NY, USA,IEEE, US, 13 April 1997 (1997-04-13), pages 541-546, XP010225495 ISBN: 0-7803-3949-5

## Description

### TECHNICAL FIELD

The present invention relates to a method of analyzing electronic components which comprise solder bumps or the like bump electrode terminals, and a device for analyzing the electronic components. The present invention relates also to electronic components which are designed using the analyzing method or the analyzing device.

### BACKGROUND ART

In designing an electronic component which is provided with solder bumps or BGA (Ball Grid Array) having solder bumps or Au bump electrodes, the use of various numerical simulations has been tried for predicting the characteristics to be exhibited upon completion of the electronic component. A background situation why numerical simulation is needed is that; the electrode terminal density in an electronic component which has a number of solder bumps or BGA, among other types of electronic components, is getting higher, while in the inside of the electronic component the wiring pattern has become quite complicated reflecting the designing efforts for a still higher circuit integration. As the result, mechanical interaction and electrical interaction among these items increase, which makes it difficult for the circuit designers and the device engineers to realize targeted characteristics if they depend solely on their theoretical knowledge and past experience.

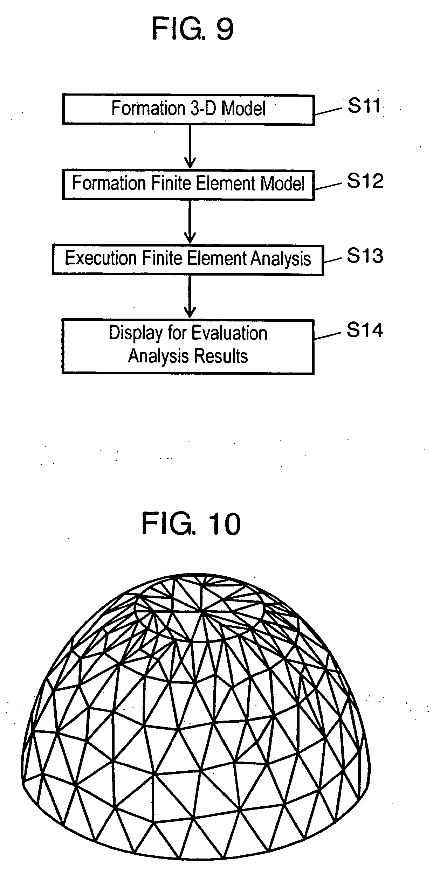

A conventional method of numerical simulation used for predicting the electrical characteristics of an electronic component is described referring to the drawings. FIG 9 is a flow chart showing a conventional procedure for analyzing electronic components. As shown in FIG 9; at step S11, a 3-D model electronic data containing information about the shape of electronic component is provided using a 3-D CAD and a model forming function of a numerical simulation tool. Next at step S12, a finite element model is formed based on the above data. And then at step S13, a numerical simulation such as a finite element analysis is executed using the finite element model. At the final step S14, the results of analysis are displayed for evaluation.

In generally-used conventional numerical simulation tools, however, the formation of finite element model at step S12 tends to employ an enormous number of finite elements, because they exert best efforts to form a finite element model to be as closely identical to the 3-D model by making the size of solid element to be the smallest in order that it least affects the original shape information.

Solder bumps, Au bumps and bump electrodes of BGA are mostly formed in a 3-D model including curved lines and curved surfaces. So, if such a shape is to be approximated honestly to the original shape by meshing it with solid elements, such as a tetrahedra, a hexahedra, etc., the solid elements needs to be very fine-sized, and number of the element counts must be increased. This leads to enormous element counts. Normally, a single electronic component is provided with a number of solder bumps or BGA; then, the increase in element counts becomes still more significant.

FIG 10 is a magnified perspective view showing a finite element model of a solder bump formed by way of a conventional analysis method. Suppose a solder bump shown in FIG 10 is formed of 7,444 solid elements and an electronic component has 49 such solder bumps, then the total number of elements in a single electronic component amounts to approximately 360 thousands (7444 x 49 = 364,756). The enormous number of element counts leads to a very lengthy analysis time. The consequence is that; it takes several days for obtaining a prediction on the characteristics to be exhibited by an electronic component at the time of completion, thus it takes a long time for designing an electronic component. This has been one of the problems that the electronic components are expensive. Furthermore, there arises an inconvenience with a finite element analysis and other numerical simulation for predicting electrical characteristics that the simulation accuracy deteriorates remarkably if a shell element, a beam element or the like finite element is used for approximating a solder bump shape or BGA shape.

Japanese Patent Laid-Open Application No. H11-272735 discloses a conventional method of evaluating electronic devices and a facility for evaluating them. It teaches a method of predicting the mechanical strength of an electronic component having solder bumps or BGA, which method forms a finite element analysis model by combining shell elements approximated with flat plane having an ignored thickness and beam elements approximated with beam having an ignored thickness, etc. in addition to the solid element.

Japanese Patent Laid-Open Application No. 2004-85397 teaches a method for predicting the life time of a solder joint portion in accordance with the Coffin-Manson Law.

A facility used for predicting the performance of manufactured components is disclosed in EP Publication No. 1342137 A2 (WO2002/037342). The Publication describes a rheological degradation database for storing a plurality of rheological degradation date for associated materials, a mechanical degradation database for storing a plurality of mechanical degradation date for associated materials, and a computer for computing part performance predictions for a respective material with a predetermined geometry under predetermined processing conditions.

Reference may be made to Smetak EC et al: "Application of solid modeling to three-dimensional electrostatic field computation", IEEE, 2 October 1998, pp 1707-1711, XP010519310, which disclosed the pre-characterizing features of the present invention. Reference may also be made to EP-A-1187919 and to Kaihuai Qin et al: "A genetic algorithm for the minimum weight triangulation", EVOLUTIONARY COMPUTATION, 1997, IEEE International Conference on Indianapolis, USA, 13-16 April 1997, pages 541-546.

The present invention aims to reduce the cost of electronic components by reducing a time span needed for evaluation, performance prediction or life prediction of an electronic component; more specifically, by making the designing time shorter.

### DISCLOSURE OF INVENTION

The present invention is defined in the claims.

A method of analyzing electronic components in a preferred embodiment of the present invention (more specifically electronic components having a number of solder bumps or bump electrode terminals consisting of BGA), replaces curved lines and curved surfaces constituting a 3-D model of solder bump or BGA with a 3-D model approximated with polygons, and uses a finite element model of solid element which has been made available by converting the polygon-approximated 3-D model.

In the above-described method, even in a case where an electronic component comprises a number of solder bumps or BGA, curved lines and curved surfaces of the solder bump or BGA are replaced with a polygon-approximated 3-D model, before a 3-D model of the bumps or BGA is converted into a finite element model. By converting it into a finite element model of solid element, the increase in the total element counts used in the finite element analysis can be suppressed. So, a time span needed for the finite element analysis can be made shorter.

In a case where the shape constituting a 3-D model of solder bump or BGA contains a circle or an oval, another method of analyzing electronic components in the present invention replaces the circle or the oval with a 3-D model approximated with polygons having not less than 6 not more than 16 corners, and uses a finite element model of solid element made available through conversion of the polygon-approximated 3-D model.

By replacing an electrode terminal of solder bump or BGA with a 3-D model approximated with polygons having not less than 6 not more than 16 corners, errors contained in the analysis results obtained through the use of finite element model made available by converting the 3-D model can be made sufficiently small. Therefore, the increase in element counts can be suppressed without causing an increase in the analysis errors. Thus, the analysis time, which conventionally required as long as several days, will not be that long; which makes a numerical simulation practically usable for predicting electrical characteristics.

A device for analyzing electronic components in the preferred embodiment comprises means for providing a 3-D model of an electronic component, more specifically that having a number of electrode terminals consisting of curved surfaces of solder bumps, BGA, etc., means to replace curved lines and curved surfaces of a solder bump and BGA with a 3-D model approximated with polygons, means to convert the polygon-approximated 3-D model into a finite element model of solid element, finite element analysis means for calculating electrical characteristics, and means for displaying results of the analysis.

When an electronic component analyzing device in the present invention is used for designing or analyzing an electronic component, prediction of electrical characteristics of an electronic component which comprises a number of solder bumps or BGA can be made within a short time. So, this contributes to design an electronic component within a shorter time.

An electronic component comprising bump electrodes such as solder bumps, Au bumps or BGA, is designed by replacing curved lines and curved surfaces of the bump electrodes with a 3-D model approximated with polygons, and using a finite element model of solid element made available by converting the 3-D model.

An electronic component comprising solder bumps or BGA, is designed, in a case where the shape of a 3-D model representing the constituent solder bumps or BGA includes a curved surface of a circle or an oval, by replacing the circle or the oval with a 3-D model approximated with polygons of not less than 6 not more than 16 corners, and using a finite element model of solid element made available by converting the polygon-approximated 3-D model.

Electronic components can be designed to exhibit the optimum electrical characteristics, within a short time. Thus the present invention helps implementing electronic components of superior electrical characteristics at low cost.

An electronic component is designed or analyzed using a device for analyzing electronic components; which device comprising means for providing a 3-D model of an electronic component having electrode terminals on which bump electrodes such as solder bumps, Au bumps or BGA are formed, means to replace curved line, curved surface and the like curved portion of a solder bump or BGA with a 3-D model approximated with polygons of not less than 6, not more than 16 corners, means to convert the polygon-approximated 3-D model into a finite element model of solid element, finite element analysis executing means for calculating electrical characteristics, and means for displaying results of the analysis made available at the finite element analysis executing means.

A device for analyzing electronic components in accordance with the present invention can be used for designing or analyzing an electronic component so that it exhibits the optimum electrical characteristics, within a short time. So, the electronic component analyzing device contributes to implement electronic components of superior electrical characteristics at a lower cost.

### BRIEF DESCRIPTION OF THE DRAWINGS

FIG 1 is a flow chart showing a procedure of analyzing electronic components in accordance with an exemplary embodiment of the present invention.
FIG 2 is a perspective view showing an electronic component provided with solder bumps.
FIG 3 is a side view of an electronic component provided with solder bumps.
FIG 4 is a magnified perspective view of a solder bump.
FIG. 5 is a perspective view showing a polygon-approximated 3-D model of an electronic component in an exemplary embodiment of the present invention.
FIG 6 is a side view of a polygon-approximated 3-D model of an electronic component in an exemplary embodiment of the present invention.
FIG 7 is a magnified perspective view of a 3-D model of a solder bump approximated with polygons in an exemplary embodiment of the present invention.
FIG 8 shows an interrelationship between the degree of polygonal approximation and the numerical analysis errors regarding a solder bump in an exemplary embodiment of the present invention.
FIG 9 is a flow chart showing a conventional procedure of analyzing electronic components.
FIG. 10 is a perspective view showing a finite element model of a solder bump provided in accordance with a conventional analysis method.

### BEST MODE FOR CARRYING OUT THE INVENTION

### (FIRST EMBODIMENT)

A first exemplary embodiment of the present invention is described referring to the drawings.

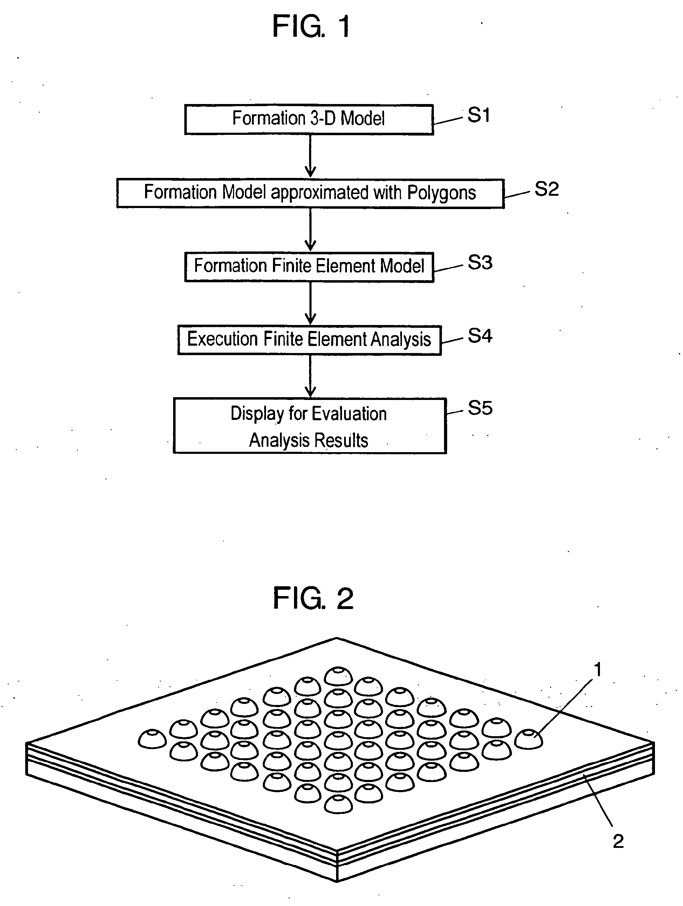

FIG 1 is a flow chart showing a procedure of analyzing an electronic component in accordance with the present embodiment of the invention. As shown in FIG 1, a 3-D model electronic data containing information on the shape of electronic component is provided at the first step S1, in the same way as in the conventional procedure. At step S2, curved lines and curved surfaces constituting the 3-D model is replaced with a 3-D model approximated with polygons. At step S3, the polygon- approximated 3-D model is converted to form a finite element model. Then at step S4, a finite element analysis using the finite element model made available at step S3 or the like numerical simulation is executed. Finally at step S5, results of the analysis is displayed and evaluated on. As for a kind of element in the finite element model provided at step S3, a solid element of the highest analysis accuracy level is used.

The process step S2 introduced in the present invention for replacing with a polygon- approximated 3-D model enables to reduce a number of solid elements in a finite element model which is to be provided at step S3. So, a time needed for the analysis can be made shorter.

Now in the following, a practical example of application of the present invention to an electronic component is described.

FIG 2 is a perspective view of an electronic component having solder bumps. In the drawing, solder bumps 1 are provided on the electrode terminals of electronic component 2.

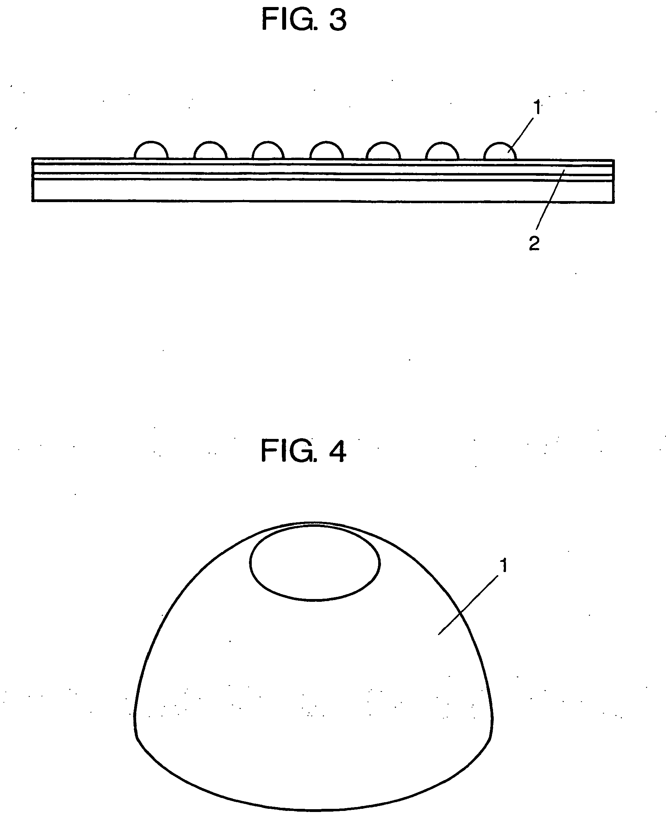

FIG 3 is a side view of that shown in FIG 2. FIG 4 is a magnified perspective view of solder bump 1 shown in FIG 2.

Referring to FIG 4, conventional analysis method tries to form a finite element model faithfully to the shape of solder bump 1, or tries to make a deviation from the original to be the smallest, by approximating the bowl shape with a group of micro-sized solid elements. As the result, the total number of element counts becomes enormous. However, in an analysis procedure in the present invention, a 3-D model in which curved lines and surfaces of solder bump 1 are included is approximated using such a polygon having corners for not less than 6 not more than 16.

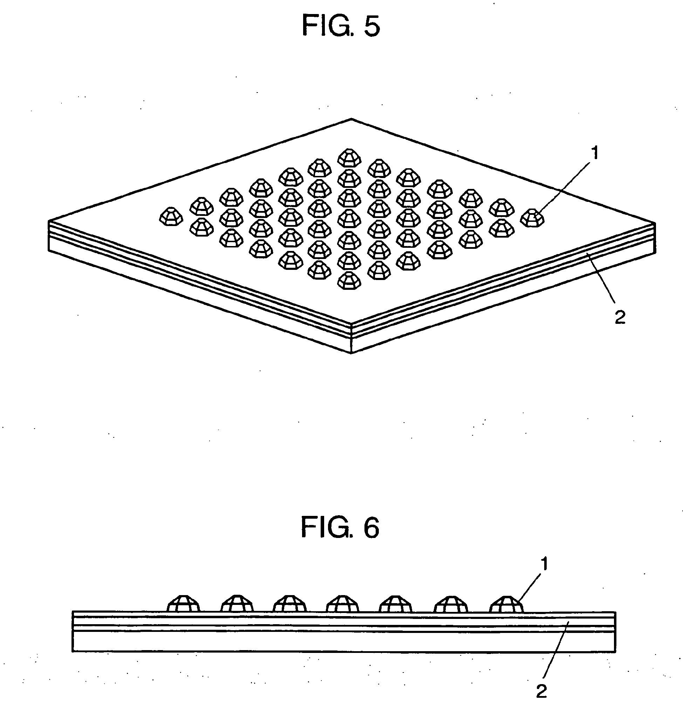

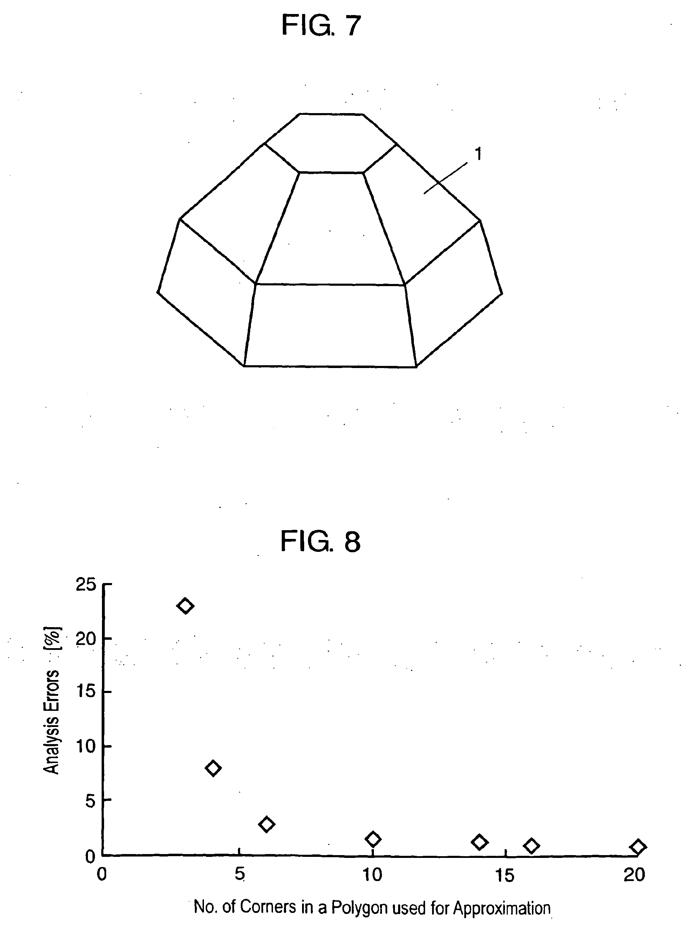

FIG. 5 is a 3-D model of that of FIG 2 approximated with the polygons. FIG 6 is a side view of that shown in FIG 5. FIG 7 is a magnified perspective view of solder bump 1 shown in FIG 5.

Referring to FIG 7, number of solid elements included in a finite element model provided from polygon-approximated model of solder bump 1 is 1620; which compares to 7,444 conventional solid elements. Namely, difference in the solid element counts between the finite element model as per conventional analysis method and that as per the present invention is 5,824. If there are 49 solder bumps 1 on an electronic component as shown in FIG 2, gross difference in the number of elements between the conventional and the present invention amounts to, in a simple calculation, approximately 280 thousands for a single piece of electronic component.

In most of the cases where electronic components comprise solder bump 1 or BGA, there exists a curved line or a curved surface in their shapes. And, as shown in FIG 2, each one of such electronic components is normally provided with a number of solder bumps 1 or BGA. Therefore, there is an enormous increase in the number of element counts.

In a simulation of electromagnetic fields conducted with an electronic component in line with the flow chart of FIG 1, an analysis method in the present invention completed the analyzing operation in approximately 4 hours, which the conventional analysis method used to take approximately 2 days. Thus, it has been proved that the present invention realizes a considerable time saving in the analysis.

On the other hand, a question is expected to arise that, in approximating curved lines and curved surfaces included in 3-D model of solder bump 1 or BGA with polygons, the degree of approximation to original model would deteriorate and invite substantial analysis errors if the polygon used for approximation is not provided with a sufficient number of corners. So, a study was made for confirmation regarding a polygon used for approximation; as to what shape of a polygon, viz. how many polygon corners, has to be used for approximating a round shape formed at a horizontal cross section of solder bump 1, if degradation in the degree of approximation has to be suppressed.

FIG 8 is a chart showing interrelationship between the degree of approximation with polygons and the analysis errors. The horizontal axis represents number of corners of a polygon used in approximating the round shape, the vertical axis represents the numerical errors as compared with results of analysis conducted with that having very high element counts as shown in FIG 10.

The polygon-approximation in the present invention in terms of the vertical direction of solder bump 1 is conducted, as shown in FIG 7, on a plane at a middle part between the bottom surface and the upper surface, in addition to the approximation conducted on the bottom surface and the upper surface.

As understood from FIG 8, which shows interrelationship between the degree of approximation with polygons and the numerical analysis errors with a solder bump, the analysis errors can be suppressed to be 3% or lower if a polygon used is provided with not less than 6 corners. Thus, prediction of the electrical characteristics for practical use can now be obtained through numerical simulation. If number of corners of a polygon is not less than 16, the solid element counts increase in forming a finite element model; which leads to a longer analysis time and becomes unsuitable to practical purposes. So, appropriate number of corners with the polygon for use in approximation is not less than 6 not more than 16.

As described in the above, a method in accordance with the present invention can complete analysis for prediction of electrical characteristics in mere several hours, which the conventional analysis method used to take as long as several days. Furthermore, the analysis results thus obtained in accordance with the present invention are almost identical to those obtained through the conventional method taking several days. This contributes to making the designing time of an electronic component shorter.

The present invention is most suitable to a method of analyzing a solder bump, an Au bump, a BGA having such bump electrodes or the like electronic components, and to a device for analyzing the electronic components. The present invention is suitable also to analyzing the performance, or predicting the life time, of various types of electrodes having a so-called curved surface such as a solder bump; as well as various types of electronic components, or terminals, having a curved portion.

### INDUSTRIAL APPLICABILITY

In predicting characteristics of a so-called electronic component comprising bump electrodes, or that having a number of solder bumps, Au bumps or BGA having such bump electrodes, the present invention offers an analysis method, which replaces curved line and curved surface forming a 3-D model of solder bump or BGA with a 3-D model approximated with polygons, and then uses a finite element model of solid element made available by converting the polygon-approximated 3-D model.

In designing or analyzing an electronic component comprising a number of solder bumps or BGA, a device for analyzing electronic components in the present invention can predict the electrical characteristics within a short time. Thereby, the designing time can be made shorter.

Since the electronic components in the present invention can be designed, predicted in their prospective performance or even the life time using the method of analyzing electronic components, or the analyzing device, numerical simulation for predicting electrical characteristics of an electronic component comprising solder bumps or BGA can be completed within mere several hours, conventionally which used to take several days. Thus, the designing time can be shortened, which contributes significantly to the cost reduction of electronic components.

## Claims

1. A method of analyzing electronic components comprising electrode terminal having curved surface, comprising the steps of :
replacing (S2) the electrode terminal with a 3-D model approximated with polygons, and
using (S3, S4) a finite element model of solid element made available by converting the polygon-approximated 3-D model
**characterized in that** the polygons are of not less than 6 and not more than 16 corners.

2. A method of analyzing electronic components recited in claim 1, wherein the electrode is a solder bump (1), an Au bump or a BGA.

3. A device for analyzing electronic components comprising electrode terminal having curved surface, comprising :
means to form a 3-D model of the electrode terminal,
means to replace the curved surface of the electrode terminal with a 3-D model approximated with polygons,
means to convert the polygon-approximated 3-D model into a finite element model of solid element,
means to execute a finite element analysis for calculating electrical characteristics, and
means for displaying the results of analysis made available by the finite element analysis executing means;
**characterized in that** the polygons are of not less than 6 and not more than 16 corners.

4. A device for analyzing electronic components recited in claim 3, wherein electrode is a solder bump (1), an Au bump or a BGA.

## Patentansprüche

1. Verfahren zum Analysieren elektronischer Bauelemente mit einem Elektroden-Anschluss mit einer gekrümmten Fläche, mit den Schritten:
Ersetzen (S2) des Elektroden-Anschlusses durch ein 3-D-Modell, das näherungsweise mit Polygonen dargestellt ist; und
Verwenden (S3, S4) eines Finite-Elemente-Modells eines festen Elements, das durch Umwandeln des näherungsweise mit Polygonen dargestellten 3-D-Modells erhalten wird,
**dadurch gekennzeichnet, dass** die Polygone nicht weniger als sechs und nicht mehr als sechzehn Ecken haben.

2. Verfahren zum Analysieren elektronischer Bauelemente nach Anspruch 1, **dadurch gekennzeichnet, dass** die Elektrode ein Lötkontakthügel (1), ein Au-Kontakthügel oder eine BGA (ball grid array; Kugelgitteranordnung) ist.

3. Vorrichtung zum Analysieren elektronischer Bauelemente mit einem Elektroden-Anschluss mit einer gekrümmten Fläche, mit:
Mitteln zum Herstellen eines 3-D-Modells des Elektroden-Anschlusses;
Mitteln zum Ersetzen der gekrümmten Fläche des Elektroden-Anschlusses durch ein 3-D-Modell, das näherungsweise mit Polygonen dargestellt ist;
Mitteln zum Umwandeln des näherungsweise mit Polygonen dargestellten 3-D-Modells in ein Finite-Elemente-Modell eines festen Elements;
Mitteln zum Durchführen einer Finite-Elemente-Analyse zum Berechnen von elektrischen Eigenschaften; und
Mitteln zum Anzeigen der Ergebnisse der Analyse, die mit den Finite-Elemente-Analyse-Durchführungsmitteln erhalten werden,
**dadurch gekennzeichnet, dass** die Polygone nicht weniger als sechs und nicht mehr als sechzehn Ecken haben.

4. Vorrichtung zum Analysieren elektronischer Bauelemente nach Anspruch 3, **dadurch gekennzeichnet, dass** die Elektrode ein Lötkontakthügel (1), ein Au-Kontakthügel oder eine BGA ist.

## Revendications

1. Procédé d'analyse de composants électroniques comprenant une borne d'électrode ayant une surface incurvée, comprenant les étapes de:
remplacer (S2) la borne d'électrode avec un modèle en 3-D approximé à l'aide de polygones, et
utiliser (S3, S4) un modèle d'éléments finis d'un élément plein procuré par la conversion du modèle en 3-D approximé par des polygones;
**caractérisé en ce que** les polygones sont composés de pas moins de 6 et pas plus de 16 coins.

2. Procédé d'analyse de composants électroniques selon la revendication 1, dans lequel l'électrode est une perle de soudure (1), une perle d'Au ou un boîtier à billes (BGA).

3. Dispositif d'analyse de composants électroniques comprenant une borne d'électrode ayant une surface incurvée, comprenant:
un moyen pour former un modèle en 3-D de la borne d'électrode,
un moyen pour remplacer la surface incurvée de la borne d'électrode par un modèle en 3-D approximé par des polygones,
un moyen pour convertir le modèle en 3-D approximé par des polygones en un modèle d'éléments finis d'un élément plein,
un moyen pour exécuter une analyse par éléments finis pour calculer des caractéristiques électriques, et
un moyen pour afficher les résultats d'analyse procurés par le moyen d'exécution de l'analyse par éléments finis;
**caractérisé en ce que** les polygones sont composés de pas moins de 6 et pas plus de 16 coins.

4. Dispositif d'analyse de composants électroniques selon la revendication 3, dans lequel une électrode est une perle de soudure (1), une perle d'Au ou un boîtier à billes (BGA).
